# EUROPEAN PATENT APPLICATION

(11) **EP 4 804 149 A1**
(43) Date of publication of application: **09.09.2026**
(21) Application number: 24884505.9
(22) Date of filing: 22.10.2024
(51) Int. Cl.: G06V 20/70

(54) **IMAGE LABELING METHOD, COMPUTER DEVICE AND STORAGE MEDIUM**

(30) Priority: 31.10.2023 CN 202311422619
(71) Applicant: Anhui NIO Autonomous Driving Technology Co., Ltd., Hefei, Anhui 230601 (CN)
(72) Inventor: REN, Shaoqing, Hefei, Anhui 230601 (CN); XIE, Tao, Hefei, Anhui 230601 (CN); ZHOU, Xin, Hefei, Anhui 230601 (CN); LI, Bin, Hefei, Anhui 230601 (CN)
(74) Representative: Vossius & Partner Patentanwälte Rechtsanwälte mbB
(86) International application number: PCT/CN2024/126354
(87) International publication number: WO 2025/092501

(57) **Abstract**

The present application relates to the field of automated data annotation, and more particularly to an image annotation method, a computer device for implementing the method, and a computer storage medium for implementing the method. The image annotation method includes: utilizing an image segmentation model to perform segmentation on original images from multiple views, to output segmentation mask maps of the original images for individual views, the segmentation mask maps containing annotation information indicating contours of target objects; utilizing a neural radiance field to perform multi-view fusion on the segmentation mask maps for the individual views to correct single-view errors, and generating corrected first mask maps; and performing multi-frame temporal fusion on the first mask maps according to a temporal relationship to correct single-frame errors, and generating second mask maps for a bird's-eye view.

## Description

The present application claims priority to Chinese Patent Application No. 202311422619.7, filed on October 31, 2023 and entitled "IMAGE ANNOTATION METHOD, COMPUTER DEVICE, AND STORAGE MEDIUM", which is incorporated herein by reference in its entirety.

### Technical Field

The present application relates to the field of automated data annotation, and more particularly to an image annotation method, a computer device for implementing the method, and a computer storage medium for implementing the method.

### Background Art

Perception of objects in an autonomous driving system relies on model iteration, and a large amount of annotated data is the foundation of model iteration. Image segmentation models, as important perception and recognition models in autonomous driving, are different from detection and classification models, and require pixel-level annotation. The pixel-level annotation requires extremely high precision, and object edges need to be perfectly fitted. As a result, the cost of segmentation and annotation for a single image is extremely high, and annotation time is extremely long. Such pixel-level annotation, due to excessively high complexity and cost, cannot support large-scale data volume, causing the perception function of the autonomous driving system to be limited by data volume. Therefore, the precision cannot be further improved.

It should be noted that information disclosed in the Background Art section is only used to enhance the understanding of the background of the present application, and therefore may include information that does not constitute the prior art known to those of ordinary skill in the art.

### Summary

In order to solve or at least alleviate one or more of the above-mentioned problems, the following technical solutions are provided. Embodiments of the present application provide an image annotation method, a computer device for implementing the method, and a computer storage medium for implementing the method, to reduce annotation cost and improve annotation efficiency, thereby improving iteration efficiency of an autonomous driving model.

According to a first aspect of the present application, an image annotation method is provided. The method includes the steps of: A. utilizing an image segmentation model to perform segmentation on original images from multiple views, to output segmentation mask maps of the original images for individual views, the segmentation mask maps containing annotation information indicating contours of target objects; B. utilizing a neural radiance field to perform multi-view fusion on the segmentation mask maps for the individual views to correct single-view errors, and generating corrected first mask maps; and C. performing multi-frame temporal fusion on the first mask maps according to a temporal relationship to correct single-frame errors, and generating second mask maps for a bird's-eye view.

As an alternative or supplement to the foregoing solution, in the image annotation method according to an embodiment of the present application, the method further includes: performing frame extraction on video data acquired by multi-view video acquisition units, and generating a sequence of original images with timestamps.

As an alternative or supplement to the foregoing solution, in the image annotation method according to an embodiment of the present application, step A includes: utilizing the image segmentation model to perform pixel-level recognition on the original images, where each pixel in the original images is annotated with class information; and rendering the contours of the target objects based on the annotated class information.

As an alternative or supplement to the foregoing solution, in the image annotation method according to an embodiment of the present application, the image segmentation model is constructed based on a training data set containing sample images and mask information of the sample images, where the mask information is generated based on a target recognition result for the target objects in the sample images, and the image segmentation model includes any one or more of an instance segmentation model for rigid objects, a semantic segmentation model for non-rigid objects, or a panoptic segmentation model for rigid objects and non-rigid objects.

As an alternative or supplement to the foregoing solution, in the image annotation method according to an embodiment of the present application, step B includes: utilizing the neural radiance field to perform three-dimensional reconstruction on the segmentation mask maps, to project two-dimensional masks in the segmentation mask maps for the multiple views onto a three-dimensional mask grid; and back-projecting a reconstructed three-dimensional mask map onto two-dimensional mask grids, to generate corrected first mask maps for the multiple views.

As an alternative or supplement to the foregoing solution, in the image annotation method according to an embodiment of the present application, step C includes: utilizing affine transformation to project first mask maps for the multiple views with a same timestamp to a bird's-eye view in a world coordinate system, to generate third mask maps for the bird's-eye view at individual instants; and performing multi-frame temporal fusion on the third mask maps at the individual instants according to a temporal relationship, to generate the second mask maps, where a size of the second mask maps is larger than a size of the third mask maps.

As an alternative or supplement to the foregoing solution, in the image annotation method according to an embodiment of the present application, the method further includes: calculating correction errors of individual target objects during the multi-frame temporal fusion; and back-projecting the second mask maps to specific views, to generate fourth mask maps for the specific views.

As an alternative or supplement to the foregoing solution, in the image annotation method according to an embodiment of the present application, the method further includes: if the correction errors of the individual target objects are all less than or equal to the first threshold, outputting the fourth mask maps as a final annotation result, where the specific views include a plurality of original views corresponding to the original images.

As an alternative or supplement to the foregoing solution, in the image annotation method according to an embodiment of the present application, the method further includes: if the correction error of a first target object is greater than the first threshold, performing single-object aggregation on the first target object in the fourth mask maps to repair an error of the first target object in the fourth mask maps, and generating corrected fifth mask maps, where the specific views include any one or more of a plurality of original views corresponding to the original images; and utilizing the fifth mask maps to update the segmentation mask maps, and re-performing step B and step C.

As an alternative or supplement to the foregoing solution, in the image annotation method according to an embodiment of the present application, calculating the correction errors of the target objects includes calculating pixel differences of the target objects in adjacent frames, and/or the single-object aggregation is performed based on an interactive segmentation model.

According to a second aspect of the present application, a computer device is provided. The computer device includes: a memory; a processor; and a computer program stored on the memory and executable on the processor, where execution of the computer program causes any one of the embodiments of the image annotation method according to the first aspect of the present application to be performed.

According to a third aspect of the present application, a computer storage medium is provided. The computer storage medium includes instructions that, when executed, cause any one of the embodiments of the image annotation method according to the first aspect of the present application to be performed.

An image annotation solution according to one or more embodiments of the present application is implemented based on image segmentation and temporal dynamic repair technology. By introducing temporal features in autonomous driving, the solution not only has a single-frame annotation capability, but also can utilize a neural radiance field to correct single-view errors of images, and automatically correct single-frame errors of the images according to a temporal relationship. Compared to existing image segmentation and annotation methods, the solution can reduce annotation errors caused by problems of single-frame image jitter, holes, errors, etc., thereby improving annotation accuracy and precision of the perception function of an autonomous driving system. In addition, the solution requires no manual annotation, greatly reducing annotation cost and ineffective redundant annotation.

### Brief Description of the Drawings

The above-described and/or other aspects and advantages of the present application will become more apparent and comprehensible from the following description of various aspects with reference to the accompanying drawings, in which the same or similar units are denoted by the same reference numerals. In the accompanying drawings:
FIG. 1 is a schematic flowchart of an image annotation method 10 according to one or more embodiments of the present application; and
FIG. 2 is a schematic block diagram of a computer device 20 according to one or more embodiments of the present application.

### Detailed Description of Embodiments

The following descriptions of specific implementations are merely exemplary in nature, and are not intended to limit the disclosed technologies or the application and use of the disclosed technologies. In addition, they are not intended to be bound by any expressed or implied theory presented in the foregoing Technical Field and Background Art, or the following Detailed Description.

In the following detailed descriptions of embodiments, many specific details are set forth to provide a more thorough understanding of the disclosed technologies. However, it is clear to those of ordinary skill in the art that the disclosed technologies can be practiced without these specific details. In other instances, well-known features are not described in detail to avoid unnecessarily obscuring the description.

The terms such as "include" and "comprise" are used to indicate that in addition to units and steps that are directly and expressly described in this specification, the technical solutions of the present application further include other units and steps that are not directly or expressly described. The terms such as "first" and "second" are not used to indicate the sequence of units in time, space, size, etc., and are merely used to distinguish between the units. The technologies in the present application are typically used in electric vehicles, including, but not limited to, battery electric vehicles (BEVs), hybrid electric vehicles (HEVs), fuel cell electric vehicles (FCEVs), etc.

In some manual annotation methods for image segmentation, image annotation is mainly performed by rendering circumscribed polygons for target objects. In such an annotation manner, a circumscribed polygon required for a single target object is usually composed of 10 to 20 points, and time consumed is approximately 10 to 30 seconds. Therefore, for a complex scene with hundreds of target objects, image annotation time usually exceeds 30 minutes. In view of this, to improve annotation efficiency, semi-automated interactive segmentation can also be utilized as an annotation means. The semi-automated interactive segmentation generally outputs object contours by extracting object features at a mouse click location, calculating a similarity between surrounding pixels, and clustering pixels exceeding a threshold. Due to the use of image algorithms for automatic feature extraction, models can automatically recognize target objects to a certain extent, greatly reducing an annotation speed and annotation cost. However, annotation results of the semi-automated interactive segmentation are usually not precise and still prone to certain errors, and therefore compensation needs to be made through manual correction. In view of this, the present application provides an image annotation solution implemented based on image segmentation and temporal dynamic repair technology, to achieve higher annotation precision while reducing annotation cost and time consumption, thereby improving the perception capability of autonomous driving.

Various exemplary embodiments according to the present application will be described below in detail with reference to the accompanying drawings.

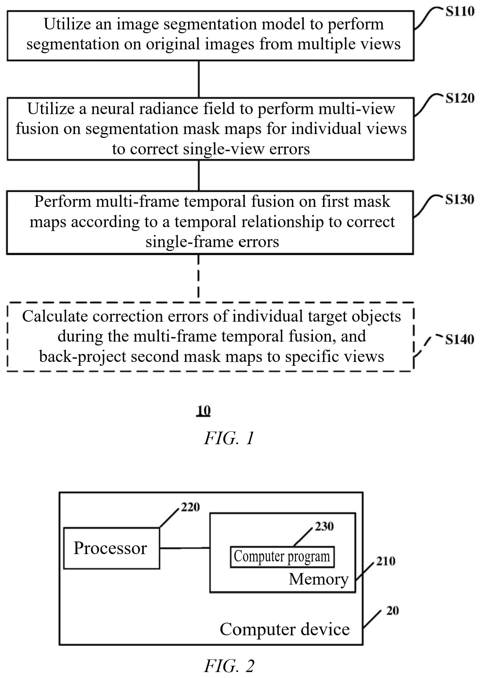

Reference is made to the accompanying drawings below. FIG. 1 is a schematic flowchart of an image annotation method 10 according to one or more embodiments of the present application.

As shown in FIG. 1, in step S110, an image segmentation model is utilized to perform segmentation on original images from multiple views, to output segmentation mask maps of the original images for individual views.

According to one or more embodiments of the disclosure, a plurality of video acquisition units are used to perform multi-view acquisition of environment information surrounding a vehicle and output corresponding multi-view video data. The plurality of video acquisition units may be arranged at different preset positions on the vehicle, with each video acquisition unit corresponding to one view. To avoid a view blind spot, image capture field-of-view ranges of the plurality of video acquisition units may overlap.

For example, the plurality of video acquisition units include one or more front-view cameras and/or one or more side-view cameras. These cameras may be mounted on a higher side of the roof of the vehicle, on a fender of the vehicle, on a light strip above a side mirror, or below a side mirror at the junction with a door panel, to increase visual redundancy and reduce perception blind spots. For example, before image segmentation, frame extraction may be performed on the video data acquired by the multi-view video acquisition units (for example, a front-left camera, a front camera, and a front-right camera), and a sequence of original images with timestamps (for example, an original image from a front-left view, an original image from a front view, and an original image from a front-right view) may be generated. Herein, a camera, a lens, a video camera, a camera module, etc. all refer to devices capable of obtaining images or pictures within a coverage area. They have similar meanings and are interchangeable. This is not limited in the disclosure.

Image segmentation refers to dividing an image into several non-overlapping regions according to features such as grayscale, color, spatial texture, geometric shape, etc., such that these features exhibit consistency or similarity within the same region, and exhibit significant differences across different regions. For example, the image segmentation model may be one of SegNet, DeepLab, Mask R-CNN, U-Net, or Gated SCNN.

Optionally, the image segmentation model is constructed based on a training data set containing sample images and mask information of the sample images, where the mask information is generated based on a target recognition result for target objects in the sample images. In some embodiments according to the present application, to avoid manual annotation of the sample images, one or more object detection models may be pre-trained. A region where a target object in a sample image is located and a class of the target object are recognized using the one or more object detection models, and it is determined whether a pixel in the sample image is a pixel in the target object, thereby generating corresponding mask information. Then, the image segmentation model is trained using the training data set containing the sample images and the mask information of the sample images. In step S110, the image segmentation model trained in the above manner may be utilized to recognize an original image from each view (for example, a front-left view, a front view, and a front-right view), such that each pixel in the original image from each view is annotated with class information (for example, vehicle, pedestrian, or lane line), to meet pixel-level annotation requirements. In addition, in step S110, a contour of the target object may further be rendered based on the annotated class information, and a segmentation mask map containing annotation information indicating the contour of the target object may be output. For example, in the output segmentation mask map, pixels with the same class information may be annotated with the same color, and pixels with different class information may be annotated with different colors.

Optionally, image segmentation models with different segmentation frameworks may be used depending on features such as characteristics of data itself, objects to be annotated, etc. For example, the image segmentation model in step S110 may be a combination of one or more of an instance segmentation (IS) model, a semantic segmentation (SS) model, or a panoptic segmentation (PS) model. Semantic segmentation is based on pixel-level segmentation without separately distinguishing instances within a class, and is mainly applicable to non-rigid objects, for example, road surfaces, lane lines, ground signs, etc. For example, all lane lines in an image may be labeled in yellow, and all road surfaces may be labeled in black. Instance segmentation is a combination of object detection and semantic segmentation, that is, detecting the target object in the image, and then labeling each pixel. Instance segmentation is typically limited by the characteristic that the target object needs to be regular and can be bounded, and therefore it is suitable for segmenting rigid objects, for example, vehicles, pedestrians, obstacles, traffic lights. etc. It should be noted that a semantic segmentation result does not distinguish different instances of the same class (for example, all pedestrians are labeled in red), and an instance segmentation result distinguishes different instances of the same class (for example, different pedestrians are distinguished using different colors). Panoptic segmentation is a collection of capabilities of instance segmentation and panoptic segmentation, not only detecting all target objects, but also distinguishing different instances of the same class, to output pixel contours of all objects in the image. It should be noted that instance segmentation only detects and pixel-wise segments the target objects (for example, pedestrians) in the image, and uses different colors to distinguish different instances, whereas panoptic segmentation detects and segments all objects in the image (including the background), and uses different colors to distinguish different instances. Image segmentation results (that is, segmentation mask maps) output by the three image segmentation models can all be used as input for the subsequent step, where the image segmentation results are mask maps having the same aspect ratio as the original images.

Next, in step S120, a neural radiance field (NeRF) is utilized to perform multi-view fusion on the segmentation mask maps for individual views to correct single-view errors, and corrected first mask maps are generated.

NeRF is a three-dimensional (3D) reconstruction technology based on a neural network. Different from conventional 3D reconstruction methods that represent a scene explicitly as point clouds, meshes, voxels, etc., NeRF models a scene as a continuous radiance field implicitly stored in a neural network. Simply by inputting two-dimensional (2D) images from multiple angles, an NeRF can be obtained through training and used to render clear photos from any view. Step S120 is intended to use the NeRF and multi-view information to perform 3D reconstruction, fuse the image segmentation results from different views, and then generate new high-quality 2D views for any view.

Optionally, in step S120, the trained NeRF may be first utilized to project 2D masks in the image segmentation results (that is, the segmentation mask maps for the individual views) onto a three-dimensional mask grid for 3D reconstruction (for example, to generate a 3D mask map based on the 2D segmentation mask map for the front-left view, the 2D segmentation mask map for the front view, and the 2D segmentation mask map for the front-right view); and a reconstructed 3D mask map is back-projected onto 2D mask grids, to generate the corrected first mask maps for the multiple views (for example, to generate the first mask map for the front-left view, the first mask map for the front view, and the first mask map for the front-right view, which are respectively corrected versions of the 2D segmentation mask map for the front-left view, the 2D segmentation mask map for the front view, and the 2D segmentation mask map for the front-right view). It should be noted that the image segmentation result for a single view is prone to defects such as incomplete segmentation, incorrect classes, etc. Therefore, compared to the segmentation mask maps for the individual views output by the image segmentation module in step S110 (for example, the 2D segmentation mask map for the front-left view, the 2D segmentation mask map for the front view, and the 2D segmentation mask map for the front-right view), the first mask maps output in step S120 (for example, the first mask map for the front-left view, the first mask map for the front view, and the first mask map for the front-right view) fuse information from the individual views, thereby correcting the defects for the single view through information complementation, and improving accuracy of data annotation.

In step S130, multi-frame temporal fusion is performed on the first mask maps for the individual views generated in step S120 according to a temporal relationship to correct single-frame errors, and second mask maps for a bird's-eye view are generated. Because some samples cannot be repaired even after the multi-view fusion, step S130 is intended to further alleviate the problem of inaccurate details in the image segmentation results through combination of the view fusion and the temporal fusion.

Optionally, in step S130, affine transformation is first utilized to project first mask maps for the multiple views with a same timestamp to a bird's-eye view (BEV) in a world coordinate system, to generate third mask maps for the BEV at individual instants, and then multi-frame temporal fusion is performed on the third mask maps at the individual instants according to the temporal relationship to generate the second mask maps. For example, the first mask map for the front-left view, the first mask map for the front view, and the first mask map for the front-right view obtained based on original data acquired by the front-left camera, the front camera, and the front-right camera at the same instant may be spatially fused to obtain a third mask map for the BEV, where a size of the third mask map for the BEV is larger than a size of the first mask maps for the original views. Next, according to the temporal relationship between consecutive frames, the third mask maps at a plurality of instants are fused to obtain the second mask maps after the temporal fusion, where a size of the second mask maps is larger than the size of the third mask maps. It can be understood that, due to fusion of the multi-view information and the multi-frame information, compared to the first mask maps, the second mask maps have repaired the single-frame errors, thereby reducing problems such as single-frame jitter, holes, etc., and further improving the accuracy of the data annotation.

The above-described image annotation method 10 combines image segmentation and temporal dynamic repair technology. Compared to the existing segmentation solutions, by introducing temporal features in autonomous driving, the method not only has a single-frame annotation capability, but also can utilize an NeRF to correct single-view errors of images, and automatically correct single-frame errors of the images according to a temporal relationship. While reducing the annotation cost, the method also reduces annotation errors caused by problems such as single-frame image jitter, holes, errors, etc., thereby improving annotation accuracy and precision of the perception function of an autonomous driving system. Meanwhile, the disclosure recognizes that during practice, there may still be some persistent annotation errors that cannot be resolved through the temporal dynamic repair, and therefore a single-object aggregation step may be further added to perform targeted repair on an erroneous sample.

Optionally, the method 10 may further include step S140: calculating correction errors of individual target objects during the multi-frame temporal fusion, and back-projecting the second mask maps to specific views, to generate fourth mask maps for the specific views.

In one example, the correction errors may be determined by calculating pixel differences of the target objects in adjacent frames. In another example, the correction errors may also be determined by calculating position and posture changes of the target objects in the mask maps before and after the temporal fusion. For example, a translation amount, a rotation angle, a scale change, etc. are determined.

For example, if the correction errors of the individual target objects are all less than or equal to a first threshold, it is determined that the single-object aggregation does not need to be performed, and the second mask maps are back-projected to the fourth mask maps for the specific views as a final annotation result, where the specific views are a plurality of original views of the original images (for example, the front-left view, the front view, and the front-right view).

For example, if the correction error of a first target object among the plurality of target objects is greater than the first threshold, it is determined that the single-object aggregation for the first target object needs to be performed. For example, the single-object aggregation may be performed on the first target object in the fourth mask maps for the specific views to repair an error of the first target object in the fourth mask maps, and corrected fifth mask maps are generated, where the specific views include any one or more of a plurality of original views corresponding to the original images. Through the single-object aggregation, the annotation of the first target object for the original view has been corrected. Then, the corrected fifth mask maps may be utilized to update the segmentation mask maps generated in step S110. That is, the fifth mask maps are utilized as the input of step S120, the multi-view fusion is performed on the fifth mask maps, and the multi-frame temporal fusion in step S130 is performed, to further improve the accuracy of the annotation. For example, the single-object aggregation may be performed based on an interactive segmentation model. That is, through three steps of inputting a mask map of an object, extracting features of a corresponding region, and searching for nearest neighbor pixels of the features, erroneous and missed pixels are further corrected and clustered, thereby obtaining a more accurate annotated image.

FIG. 2 is a schematic block diagram of a computer device 20 according to one or more embodiments of the present application. The computer device 20 includes a memory 210, a processor 220, and a computer program 230 stored on the memory 210 and executable on the processor 220, where execution of the computer program 230 causes the image annotation method 10 as shown in FIG. 1 to be performed. In addition, as described above, the present application may also be implemented as a computer storage medium, in which a program for causing a computer to perform the image annotation method 10 shown in FIG. 1 is stored. Here, various forms of computer storage media, for example, a disk (for example, a magnetic disk and an optical disc), a card (for example, a memory card and an optical card), a semiconductor memory (for example, a ROM and a non-volatile memory), and a tape (for example, a magnetic tape and a cassette tape), may be used as the computer storage medium.

Various embodiments provided in the present application may be implemented by hardware, software, or a combination of hardware and software where applicable. In addition, without departing from the scope of the present application, various hardware components and/or software components described in this specification may be combined into a combined component including software, hardware, and/or both where applicable. Without departing from the scope of the present application, various hardware components and/or software components described in this specification may be separated into sub-components including software, hardware, or both where applicable. In addition, where applicable, it is contemplated that software components can be implemented as hardware components, and vice versa.

Software (such as program code and/or data) in the present application may be stored on one or more computer storage media. It is also contemplated that the software identified herein can be implemented using one or more general-purpose or special-purpose computers and/or computer systems, networked and/or otherwise. The steps described herein can be changed in order, combined into compound steps, and/or divided into sub-steps where applicable, to provide the features described herein.

The embodiments and examples herein are provided to describe as adequately as possible embodiments according to the present application and specific applications thereof and thus enable those skilled in the art to implement and use the present application. However, those skilled in the art will know that the above descriptions and examples are provided merely for description and illustration. The descriptions provided are not intended to cover all aspects of the present application or limit the present application to the disclosed precise forms.

## Claims

1. An image annotation method, **characterized by** comprising the steps of:
A. utilizing an image segmentation model to perform segmentation on original images from multiple views, to output segmentation mask maps of the original images for individual views, the segmentation mask maps containing annotation information indicating contours of target objects;
B. utilizing a neural radiance field to perform multi-view fusion on the segmentation mask maps for the individual views to correct single-view errors, and generating corrected first mask maps; and
C. performing multi-frame temporal fusion on the first mask maps according to a temporal relationship to correct single-frame errors, and generating second mask maps for a bird's-eye view.

2. The image annotation method according to claim 1, **characterized by** further comprising:
performing frame extraction on video data acquired by multi-view video acquisition units, and generating a sequence of original images with timestamps.

3. The image annotation method according to claim 1, **characterized in that** step A comprises:
utilizing the image segmentation model to perform pixel-level recognition on the original images, wherein each pixel in the original images is annotated with class information; and
rendering the contours of the target objects based on the annotated class information.

4. The image annotation method according to claim 1, **characterized in that**
the image segmentation model is constructed based on a training data set containing sample images and mask information of the sample images, wherein the mask information is generated based on a target recognition result for the target objects in the sample images, and
the image segmentation model comprises any one or more of an instance segmentation model for rigid objects, a semantic segmentation model for non-rigid objects, or a panoptic segmentation model for rigid objects and non-rigid objects.

5. The image annotation method according to claim 1, **characterized in that** step B comprises:
utilizing the neural radiance field to perform three-dimensional reconstruction on the segmentation mask maps, to project two-dimensional masks in the segmentation mask maps for the multiple views onto a three-dimensional mask grid; and
back-projecting a reconstructed three-dimensional mask map onto two-dimensional mask grids, to generate corrected first mask maps for the multiple views.

6. The image annotation method according to claim 1, **characterized in that** step C comprises:
utilizing affine transformation to project first mask maps for the multiple views with a same timestamp to a bird's-eye view in a world coordinate system, to generate third mask maps for the bird's-eye view at individual instants; and
performing multi-frame temporal fusion on the third mask maps at the individual instants according to a temporal relationship, to generate the second mask maps, wherein a size of the second mask maps is larger than a size of the third mask maps.

7. The image annotation method according to claim 1, **characterized by** further comprising:
calculating correction errors of individual target objects during the multi-frame temporal fusion; and
back-projecting the second mask maps to specific views, to generate fourth mask maps for the specific views.

8. The image annotation method according to claim 7, **characterized by** further comprising:
if the correction errors of the individual target objects are all less than or equal to the first threshold, outputting the fourth mask maps as a final annotation result, wherein the specific views comprise a plurality of original views corresponding to the original images.

9. The image annotation method according to claim 7, **characterized by** further comprising:
if the correction error of a first target object is greater than the first threshold, performing single-object aggregation on the first target object in the fourth mask maps to repair an error of the first target object in the fourth mask maps, and generating corrected fifth mask maps, wherein the specific views comprise any one or more of a plurality of original views corresponding to the original images; and
utilizing the fifth mask maps to update the segmentation mask maps, and re-performing step B and step C.

10. The image annotation method according to claim 9, **characterized in that**
calculating the correction errors of the target objects comprises calculating pixel differences of the target objects in adjacent frames, and/or
the single-object aggregation is performed based on an interactive segmentation model.

11. A computer device, **characterized by** comprising: a memory; a processor; and a computer program stored on the memory and executable on the processor, wherein execution of the computer program causes the image annotation method according to any one of claims 1 to 10 to be performed.

12. A computer storage medium, **characterized by** comprising instructions that, when executed, cause the image annotation method according to any one of claims 1 to 10 to be performed.
